**Europäisches Patentamt**

(19) **European Patent Office**

**Office européen des brevets**

(11) Numéro de publication: **0 170 108 B1**

(12) **FASCICULE DE BREVET EUROPEEN**

(45) Date de publication du fascicule du brevet:
**17.11.88**

(21) Numéro de dépôt: **85108412.9**

(22) Date de dépôt: **06.07.85**

(51) Int. Cl.⁴: **B 03 B 5/54,** B 03 B 9/06,
B 01 D 21/04

(54) **Machine de récupération des constituants de béton.**

(30) Priorité: **11.07.84 LU 85458**

(43) Date de publication de la demande:
**05.02.86 Bulletin 86/6**

(45) Mention de la délivrance du brevet:
**17.11.88 Bulletin 88/46**

(84) Etats contractants désignés:
**AT BE CH DE FR GB IT LI NL SE**

(56) Documents cités:
**WO - A - 81/00394
DE - A - 2 157 130
FR - A - 1 448 293
FR - A - 2 245 457
FR - A - 2 452 449
US - A - 2 378 798
US - A - 4 154 671
US - A - 4 285 808**

(73) Titulaire: **Dechmann, Jean, 76, rue de la montée,
Reckange/Mess (LU)**
Titulaire: **Frisch, Henri, 1, rue de Bettembourg, Livange
(LU)**

(72) Inventeur: **Dechmann, Jean, 76, rue de la montée,
Reckange/Mess (LU)**
Inventeur: **Frisch, Henri, 1, rue de Bettembourg, Livange
(LU)**

(74) Mandataire: **Meyers, Ernest et al, Office de Brevets
Freylinger & Associés 46 rue du Cimetière B.P. 1153,
L-1011 Luxembourg (LU)**

## Description

La présente invention concerne une machine de récupération des constituants de béton, notamment des restes de béton obtenus par le rinçage de bétonnières, comprenant une fosse dans laquelle sont déversés les restes de béton et d'eau de rinçage, une bande racleuse sans fin, montée dans cette fosse et des moyens d'entraînement pour faire tourner la bande racleuse et extraire les constituants composés de gravier et de sable hors de la fosse.

On sait que les bétonnières, notamment les bétonnières automobiles destinées au transport de béton prêt à l'emploi jusqu'au lieu d'utilisation, doivent être nettoyées de leur contenu après chaque interruption de travail, pour éviter le durcissement des restes de béton. Ce nettoyage est réalisé, en général, par un rinçage à l'eau et le béton ainsi récupéré est éliminé sous forme de déchets.

Or, sachant que même en cas de déchargement complet d'une bétonnière, les résidus solides dégagés par le rinçage ont, pour chaque bétonnière un volume de l'ordre de 0,1 à 0,2 m³, une entreprise de taille moyenne, de fabrication de béton prêt à l'emploi dégage, de cette manière, annuellement jusqu'à cinq mille tonnes de déchets de béton.

En dehors des inconvénients pécuniaires résultant directement du fait que ces déchets de béton constituent des pertes non récupérables, il faut prévoir un endroit pour stocker provisoirement ces déchets au fur et à mesure de leur production. Le transport de ces restes de béton d'un endroit de stockage provisoire jusqu'à la décharge entraînent, en plus, des frais supplémentaires. Enfin, du point de vue écologique, il faut noter que, d'un côté, le terrain de la décharge des déchets de béton est rendue stérile par celui-ci et que les cours d'eau qui reçoivent l'eau de rinçage subissent une pollution non négligeable. Pour remédier à ces inconvénients on a fait des tentatives de concevoir une machine du genre décrit dans le préambule. Malheureusement ces machines comme p.ex. celle proposée dans le document US-A 4 285 808 n'ont pas donné satisfaction. D'abord elles ne permettent pas une séparation satisfaisante du ciment, d'une part, et des constituants solides tels que gravier et sable, d'autre part de sorte que la matière extraite par la bande racleuse se solidifie rapidement sous forme de béton une fois hors de la machine.

Par ailleurs, la bande raclant en permanence le fond de la fosse risque de s'embourber très vite dans la phase solide qui se dépose dans la fosse de décantantion.

Le but de la présente invention est de combler cette lacune et de prévoir une machine de récupération des constituants de béton, ceci sous forme réutilisable, permettant ainsi de supprimer, en même temps, tous les inconvénients décrits ci-dessus.

Cet objectif est atteint par une machine du genre décrit dans le préambule qui est essentiellement caractérisée en ce que la fosse est, au moins en partie, en forme de rampe inclinée, en ce que la bande racleuse est portée par un châssis qui est monté de façon pivotante au sommet de la rampe et en ce que le châssis est associé à des moyens de relevage pour le faire pivoter entre une position relevée inopérative, hors de la fosse, et une position abaissée opérative, dans laquelle la bande racleuse repose sur la phase solide du mélange béton et eau de rinçage.

Les moyens pour faire pivoter le châssis sont, de préférence, constitués par deux vérins hydrauliques.

Selon un mode de réalisation avantageux, le circuit hydraulique de chaque vérin comporte une vanne de commande destinée à contrôler la descente du châssis de manière que, pendant l'opération, seulement les racleurs de la bande pénètrent dans la phase solide et non le châssis et la bande.

La machine comporte, en outre, des moyens de récupération, telle qu'une pompe, pour extraire le ciment qui s'accumule au fond de la fosse.

La bande racleuse tourne autour d'un rouleau entraîné monté sur l'axe de pivotement du châssis et d'un rouleau de renvoi se trouvant à l'extrémité libre du châssis, ainsi que, de préférence, également autour d'un rouleau baladeur soumis à l'action d'un ressort pour assurer la tension voulue de la bande racleuse.

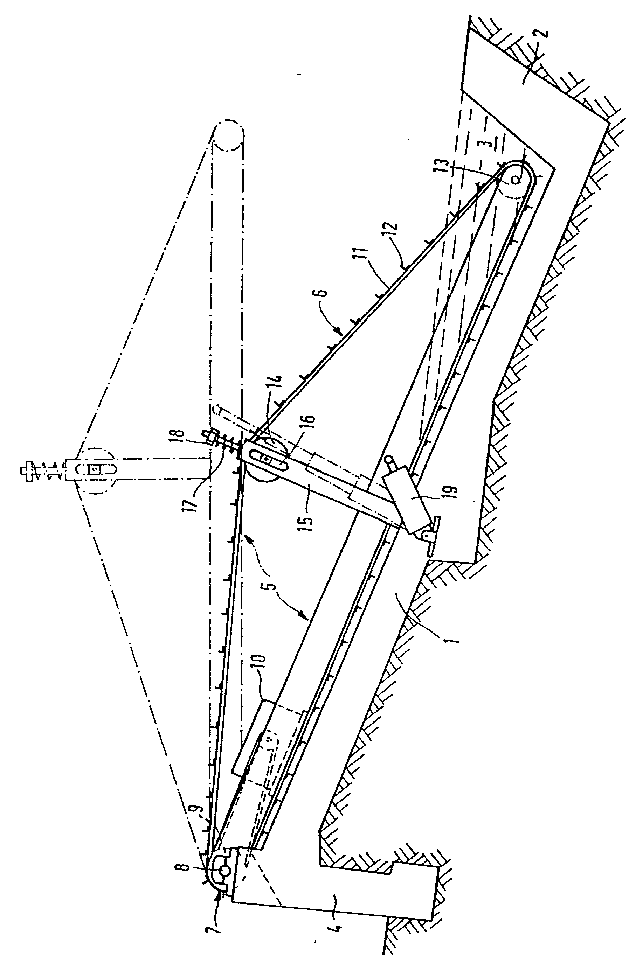

D'autres particularités et caractéristiques ressortiront de la description détaillée d'un mode de réalisation avantageux, présenté ci-dessous, à titre d'illustration, en référence à la figure unique qui montre une section longitudinale à travers une machine selon la présente invention.

Sur cette figure on voit une rampe inclinée 1, par exemple en béton, dont le fond comporte une paroi montante 2, formant avec la rampe 1 une fosse de réception des résidus de rinçage 3 de bétonnières. Ces résidus 3 sont composés d'un mélange d'eau de rinçage et de restes de béton. Le sommet de la paroi de fond 2 peut se trouver à ras de terre. Le sommet de la rampe 1 est supporté par un muret vertical 4, de sorte que le tout présente sensiblement la forme d'un Z couché. A titre d'illustration, la rampe d'un prototype possède un longueur de 15 mètres, une inclinaison de 15°C et le niveau maximal de la fosse s'étend jusqu'à la moité de la rampe. De chaque côté de la rampe se trouvent, bien entendu, des parois latérales, non montrées pour délimiter la fosse.

La machine proprement dite est constituée essentiellement d'un châssis pivotant 5 portant une bande racleuse sans fin 6. Le châssis 5 est porté par un axe 8 logé dans deux paliers latéreaux 7 sur le muret 4. Sur l'axe 8 se trouve un rouleau d'entraînement 9 actionné par un moteur électrique 10 ou un moteur à explosion.

La bande racleuse est constituée avantageusement de deux chaînes parallèles 11 reliées entre elles, à intervalles réguliers, par des racleurs 12 qui peuvent être des profilés métalliques en forme de L.

A l'extrémité libre du châssis 5 se trouve un rouleau de renvoi 13 non entraîné. Pour assurer la tension optimale de la bande racleuse 6, celle-ci évolue en outre autour d'un rouleau de tension baladeur 14. Celui-ci est monté entre deux entretoises 15 du châssis 5. L'axe de ce rouleau 14 est maintenu dans des rainures longitudinales 16 de ces entretoises sous l'action d'un ressort 17 dont la pression est ajustable au moyen d'un écrou de réglage 18.

Selon l'une des particularités de l'invention, le châssis 5 est pivotable entre deux positions extrêmes représentées respectivement en traits pleins et en traits interrompus et peut, bien entendu, occuper toutes les positions intermédiaires entre celles-ci. A cet effet, le châssis 5 est relié, de chaque côté, à un endroit se trouvant de préférence juste au-dessus du niveau de la fosse, à la tige d'un vérin hydraulique 19 monté de façon pivotante sur la rampe 1.

On va maintenant décrire le fonctionnement de la machine décrite ci-dessus. Lorsque le châssis 5 est en position relevée (traits interrompus) un ou plusieurs camions-bétonnières versent les résidus de rinçage dans la fosse, L'accès autour de la machine, étant libre, un ou plusieurs camions, suivant la grandeur de la machine, peuvent vider, en même temps, le contenu de leur bétonnière dans la fosse. Ensuite la bande racleuse 6 est mise en marche sous l'action du moteur, tandis que le châssis 5 est descendu sous l'action des deux vérins 19 jusqu'à ce que l'extrémité inférieure de la bande racleuse vienne au contact de la phase solide qui s'est déposée au fond de la fosse. A partir de ce moment les racleurs 12 entraînent les particules solides le long de la rampe 1.

Selon un aspect important de la machine, seulement les racleurs pénètrent dans la phase solide. Ceci présente le double avantage que, d'une part, les chaînes ne sont pas souillées de béton et de ciment et que la bande «n'étouffe» pas dans la phase solide et que, d'autre part, seulement le gravier et le sable sont entraînés tandis que le ciment descend au fond de la fosse.

Ceci peut être réalisé de deux manières différentes. La façon la plus simple consiste à laisser descendre le châssis tout seul sous l'action de son propre poids et suivre ainsi le niveau descendant de la phase solide au fur et à mesure que le gravier et le sable sont raclés le long de la rampe 1 et déversés par dessus le muret 4.

La préférence mérite, néanmoins, le procédé consistant à faire descendre le châssis 5 de façon contrôlée. A cet effet on prévoit dans les circuits hydrauliques des deux vérins 19 une vanne de réglage, non montrée, du débit du fluide hydraulique, moyennant laquelle on peut déterminer et régler, à base des expériences acquises, la vitesse de descente du châssis 5. Dans un machine prototype, il s'est avéré qu'une descente d'une profondeur d'un racleur par minute fournit de bons résultats.

Comme déjà mentionné, seulement le gravier et le sable sont entraînés par les racleurs 12, alors que le ciment entraîné par l'eau par dessous les racleurs 12 et à côté de ceux-ci s'accumule au fond de la fosse. Dans ce contexte il convient de signaler qu'entre la bande racleuse et chacune des parois latérales de la fosse on laisse un espace d'environ 10 cm. Lorsque la quantité de ciment qui s'est accumulée au fond de la fosse est suffisamment importante on l'extrait par pompage en vue d'une réutilisation.

Il est avantageux de prévoir dans la région supérieure de la rampe, c'est à dire dans la partie se trouvant au-dessus de la fosse, des rampes d'arrosage munies de gicleurs par lesquels des jets d'eau sont dirigés sur les racleurs pour rincer le gravier et le sable remontés par ceux-ci et entraîner les restes de ciment au fond de la fosse. L'eau pulvérisée par ces rampes sur la bande racleuse est avantageusement de l'eau recyclée à partir de la fosse.

On constate donc que la machine proposée par la présente invention permet de séparer les résidus de rinçage des bétonnières, jusqu'à présent, destinés aux décharges sous forme de déchets, en trois constituants réutilisables, à savoir l'eau, le ciment ainsi que le sable et le gravier.

**Revendications**

1. Machine de récupération des constituants de béton, notamment des restes de béton obtenus par le rinçage de bétonnières, comprenant une fosse dans laquelle sont déversés les restes de béton et d'eau de rinçage, une bande racleuse sans fin, montée dans cette fosse et des moyens d'entraînement pour faire tourner la bande racleuse et extraire les constituants composés de gravier et de sable hors de la fosse, caractérisée en ce que la fosse est, au moins, en partie, en forme de rampe inclinée (1), en ce que la bande racleuse (6) est portée par un châssis (5) qui est monté de façon pivotante au sommet de la rampe (1) et en ce que le châssis (5) est associé à des moyens de relevage pour le faire pivoter entre une position relevée inopérative, hors de la fosse, et une position abaissée opérative, dans laquelle la bande racleuse (6) repose sur la phase solide du mélange béton et eau de rinçage (3).

2. Machine selon la revendication 1, caractérisée en ce que les moyens pour faire pivoter le châssis (5) sont constitués par deux vérins hydrauliques (19).

3. Machine selon la revendication 2, caractérisée en ce que le circuit hydraulique de chaque vérin (19) comporte une vanne de commande destinée à contrôler la descente du châssis (5), de manière que, pendant l'opération, seulement les racleurs de la bande (6) pénètrent dans la phase solide et non le châssis (5) et la bande (6).

4. Machine selon l'une quelconque des revendications 1 à 3, caractérisée en ce que la bande racleuse est constituée de deux chaînes latérales (11) reliées, à intervalles réguliers, par des racleurs (12).

5. Machine selon l'une quelconque des revendications 1 à 4, caractérisée en ce que la bande racleuse (6) tourne autour d'un rouleau entraîné (9) monté sur l'axe (8) de pivotement du châssis (5) et d'un rouleau de renvoi (13) se trouvant à l'extrémité libre du châssis (5).

6. Machine selon la revendication 5, caractérisée en ce que la bande racleuse (6) évolue également autour d'un rouleau baladeur (14) monté entre deux entretoises (15) du châssis (5) et soumis à l'action d'un ressort (17) pour assurer la tension voulue de la bande racleuse (6).

7. Machine selon l'une quelconque des revendications 1 à 6, caractérisée par le présence d'une pompe pour extraire le ciment qui s'accumule au fond de la fosse.

8. Machine selon l'une quelconque des revendications 1 à 7, caractérisée par des rampes d'arrosage montées au-dessus de la partie supérieure de la rampe inclinée (1).

## Patentansprüche

1. Vorrichtung zum Rückgewinnen der Bestandteile von Beton, insbesondere bei Betonresten, die beim Spülen von Betonmischern anfallen, aus einer Grube, in die die Betonreste und das Spülwasser geschüttet werden, einem endlosen Abstreifband, das in dieser Grube angebracht ist, und aus Antriebsmitteln, um das Abstreifband umlaufen zu lassen und die aus Kies und Sand bestehenden Bestandteile aus der Grube herauszuschieben, dadurch gekennzeichnet, dass die Grube zumindest teilweise die Form einer geneigten Rampe (1) hat, dass das Abstreifband (6) von einem Chassis (5) getragen wird, das am oberen Ende der Rampe (1) schwenkbar befestigt ist, und dass das Chassis (5) mit Hebemitteln kombiniert ist, um es zu schwenken zwischen einer angehobenen Ruheposition ausserhalb der Grube und einer abgesenkten Arbeitsposition, in der das Abstreifband (6) auf der festen Phase des Beton/Spülwasser-Gemischs (3) aufliegt.

2. Vorrichtung gemäss Anspruch 1, dadurch gekennzeichnet, dass die Mittel zum Schwenken des Chassis (5) aus zwei Hydraulikzylindern (19) bestehen.

3. Vorrichtung gemäss Anspruch 2, dadurch gekennzeichnet, dass der Hydraulikkreis jedes Hydraulikzylinders (19) ein Steuerventil aufweist, das dazu bestimmt ist, die Absenkung des Chassis (5) so zu steuern, dass während des Betriebs nur die Abstreifer des Bandes (6) in die feste Phase eindringen, jedoch nicht das Chassis (5) und das Band (6).

4. Vorrichtung gemäss irgendeinem der Ansprüche 1 bis 3, dadurch gekennzeichnet, dass das Abstreifband aus zwei seitlichen Ketten (11) besteht, die in regelmässigen Abständen durch Abstreifer (12) miteinander verbunden sind.

5. Vorrichtung gemäss irgendeinem der Ansprüche 1 bis 4, dadurch gekennzeichnet, dass das Abstreifband (6) umläuft um eine angetriebene Rolle (9), die auf der Schwenkachse (8) des Chassis (5) angebracht ist, und um eine Umlenkrolle (13), die an dem freien Ende des Chassis (5) angeordnet ist.

6. Vorrichtung gemäss Anspruch 5, dadurch gekennzeichnet, dass das Abstreifband (6) ausserdem um eine verschiebbare Rolle (14) umläuft, die zwischen zwei Streben (15) des Chassis (5) angebracht ist und der Wirkung einer Feder (17) unterworfen ist, um die gewünschte Spannung des Abstreifbandes (6) sicherzustellen.

7. Vorrichtung gemäss irgendeinem der Ansprüche 1 bis 6, dadurch gekennzeichnet, dass sie eine Pumpe aufweist, um den Zement herauszupumpen, der sich auf dem Boden der Grube ansammelt.

8. Vorrichtung gemäss irgendeinem der Ansprüche 1 bis 7, dadurch gekennzeichnet, dass sie Sprühdüsen aufweist, die über dem oberen Teil der geneigten Rampe (1) angebracht sind.

## Claims

1. Machine for the recovery of the constituents of concrete, in particular concrete residues obtained by rinsing concrete mixers, comprising a pit into which the rinsing water and concrete residues are tipped, an endless stripping-off band mounted in this pit and driving means to rotate the stripping-off band and to extract the constituents composed of gravel and sand from the pit, characterized in that the pit is at least partly in the form of an inclined ramp (1), in that the stripping-off band (6) is borne by a frame (5) which is mounted to pivot at the top of the ramp (1) and in that the frame (5) is connected to raising means to pivot it between a raised, non-operative position out of the pit and a lowered, operative position in which the stripping-off band (6) rests on the solid phase of the concrete and rinsing water mixture (3).

2. Machine according to Claim 1, characterized in that the means of pivoting the frame (5) are composed of two hydraulic jacks (19).

3. Machine according to Claim 2, characterized in that the hydraulic circuit of each jack (19) has a control valve intended to control the lowering of the frame (5), such that, during operation, only the scrapers of the band (6) penetrate into the solid phase and not the frame (5) and the band (6).

4. Machine according to any one of Claims 1 to 3, characterized in that the stripping-off band is composed of two lateral chains (11) connected at regular intervals by scrapers (12).

5. Machine according to any one of Claims 1 to 4, characterized in that the stripping-off band (6) rotates about a driven roller (9) mounted on the shaft (8) of pivot of the frame (5) and of a return idler (13) located at the free end of the frame (5).

6. Machine according to Claim 5, characterized in that the stripping-off band (6) also turns about a sliding roller (14) mounted between two struts (15) of the frame (5) and subjected to the action of a spring (17) to provide the desired tension of the stripping-off band (6).

7. Machine according to any one of Claims 1 to 6, characterized by the presence of a pump to extract the cement which accumulates at the bottom of the pit.

8. Machine according to any one of Claims 1 to 7, characterized by sprinkler ramps mounted above the upper part of the incline ramp (1).